# EUROPÄISCHE PATENTSCHRIFT

(11) **EP 3 526 672 B1**
(45) Veröffentlichungstag und Bekanntmachung des Hinweises auf die Patenterteilung: **18.03.2026**
(21) Anmeldenummer: 17800928.8
(22) Anmeldetag: 19.10.2017
(51) Int. Cl.: G06F 11/07

(54) **SCHALTUNG ZUR ÜBERWACHUNG EINES DATENVERARBEITUNGSSYSTEMS**
CIRCUIT FOR MONITORING A DATA PROCESSING SYSTEM
CIRCUIT DE SURVEILLANCE D'UN SYSTÈME DE TRAITEMENT DE DONNÉES

(30) Priorität: 03.12.2016 DE 102016014417
(43) Veröffentlichungstag der Anmeldung: 21.08.2019
(73) Patentinhaber: WAGO Verwaltungsgesellschaft mit beschränkter Haftung, 32423 Minden (DE)
(72) Erfinder: WOHLGEMUTH, Christopher, 32427 Minden (DE); VOSS, Christian, 32427 Minden (DE)
(74) Vertreter: Koplin, Moritz
(86) Internationale Anmeldenummer: PCT/IB2017/001269
(87) Internationale Veröffentlichungsnummer: WO 2018/100423

(56) Entgegenhaltungen:
- EP-A1- 2 458 503
- US-A1- 2007 240 019
- US-A1- 2011 208 885

## Beschreibung

### GEBIET

Die vorliegende Erfindung bezieht sich auf eine Schaltung zur Überwachung eines Datenverarbeitungssystems. Insbesondere bezieht sich die vorliegende Erfindung auf das Rücksetzen einer Datenverarbeitungseinheit des Systems aus einem beliebigen Fehlerzustand in einen definierten Betriebszustand.

### HINTERGRUND

Bei Geräten, die von Microcontrollern gesteuert werden, wird für die Programmlaufüberwachung oftmals ein externer "Watchdog" eingesetzt, der ein Steuersignal (Resetsignal) auslöst, wenn eine Applikation im Controller nicht mehr ordnungsgemäß ausgeführt wird. Über dieses Steuersignal können der Microcontroller und das vom Microcontroller gesteuerte Gerät zurückgesetzt werden.

Hierzu wird oftmals der externe "Watchdog" mit einem Port-Pin des Microcontrollers verbunden und durch die Applikation im Controller in einem definierten Zeitraster getriggert (d. h. signaltechnisch angesprochen). Bei Abweichung von dem definierten Zeitraster kann der "Watchdog" dann auf eine nicht ordnungsgemäße Ausführung der Applikation schließen und den Microcontroller und das vom Microcontroller gesteuerte Gerät in einen definierten Betriebszustand (der bspw. dem Zustand des Microcontrollers direkt nach dem Einschalten des Microcontrollers entspricht) zurücksetzen. Bspw. zeigt die US 2007/240019 A1 ein Vorgehen zum Reaktivieren eines hängengebliebenen I₂C-Busses. Dabei überwacht ein Monitor die I₂C-Busdaten- und -taktleitungen und erkennt, ob der Bus hängenbleibt. Der Monitor misst dazu die Pakettransaktionen auf dem Bus, um zu bestimmen, ob eine maximale Transaktionszeit verstrichen ist, während sich die Leitungen in einem Hängezustand befinden. Um einen hängengebliebenen Bus zu reaktivieren können dann einzelne Slave-Geräte und Bus-Master über den Monitor selektiv zurückgesetzt werden.

EP2458503 zeigt ein System umfassend: eine erste Datenverarbeitungseinheit und eine zweite Datenverarbeitungseinheit wobei die erste Datenverarbeitungseinheit eine erste Kommunikationsschnittstelle und die zweite Datenverarbeitungseinheit eine zweite Kommunikationsschnittstelle aufweist und die erste Kommunikationsschnittstelle und die zweite Kommunikationsschnittstelle mittels einer Signalleitung verbunden sind; und eine Überwachungseinheit die mittels einer Überwachungsleitung mit der Signalleitung verbunden ist. In einem weiteren Ausführungsbeispiel zeigt EP2458503, dass eine Regelmäßigkeit des Auftretens von Datenübertragungsphasen überwacht wird und bei einer Abweichung das Rücksetzsignal ausgelöst wird.

### ZUSAMMENFASSUNG

Der vorliegenden Erfindung liegt die Aufgabe zu Grunde, den Stand der Technik zu verbessern.

Ein erfindungsgemäßes System umfasst eine erste Datenverarbeitungseinheit und eine zweite Datenverarbeitungseinheit, wobei die erste Datenverarbeitungseinheit eine erste Kommunikationsschnittstelle und die zweite Datenverarbeitungseinheit eine zweite Kommunikationsschnittstelle aufweist und die erste Kommunikationsschnittstelle und die zweite Kommunikationsschnittstelle mittels einer Signalleitung verbunden sind, und eine Überwachungseinheit, welche dazu eingerichtet und vorgesehen ist, die erste Datenverarbeitungseinheit und/oder die zweite Datenverarbeitungseinheit mittels eines Rücksetzsignals in einen definierten Betriebszustand zurückzusetzen, wobei die Überwachungseinheit mittels einer Überwachungsleitung mit der Signalleitung verbunden ist und ferner dazu eingerichtet und vorgesehen ist, ein von der ersten Kommunikationsschnittstelle über die Signalleitung an die zweite Kommunikationsschnittstelle übermitteltes Signal, welches eine Datenübertragungsphase zwischen der ersten Kommunikationsschnittstelle und der zweiten Kommunikationsschnittstelle durch einen vorbestimmten Spannungspegel des Signals signalisiert, auf eine Regelmäßigkeit des Auftretens von Datenübertragungsphasen zu überwachen und bei einer Abweichung das Rücksetzsignal auszulösen.

Unter dem Begriff "Datenverarbeitungseinheit" soll im Rahmen der vorliegenden Beschreibung und der Ansprüche insbesondere ein elektronisches Gerät zu verstehen sein, welches digital kodierte Daten (nach einem vorbestimmten Schema) verarbeitet, d. h. Eingangsdaten in Ausgangsdaten umwandelt bzw. Ausgangsdaten aus Eingangsdaten bestimmt. Ferner soll unter dem Begriff "Kommunikationsschnittstelle" im Rahmen der vorliegenden Beschreibung und der Ansprüche insbesondere eine Schnittstelle (bspw. ein Anschluss) verstanden werden, über die der Austausch von digital kodierten Daten zwischen elektronischen Geräten ermöglicht wird. Des Weiteren soll unter dem Begriff "Signalleitung" im Rahmen der vorliegenden Beschreibung und der Ansprüche insbesondere eine drahtgebundene stromleitende Leitung verstanden werden, über die elektrische Signale zwischen elektronischen Geräten ausgetauscht werden können. Außerdem soll unter dem Begriff "Datenübertragungsphase" im Rahmen der vorliegenden Beschreibung und der Ansprüche insbesondere ein durch einen Beginn und ein Ende begrenzter zusammenhängender Zeitraum verstanden werden, während dessen Daten zwischen elektronischen Geräten ausgetauscht werden.

Vorzugsweise umfasst die erste Datenverarbeitungseinheit einen Microcontroller und die zweite Datenverarbeitungseinheit ein Schieberegister.

Unter dem Begriff "Microcontroller" soll im Rahmen der vorliegenden Beschreibung und der Ansprüche insbesondere ein Halbleiterchip verstanden werden, der einen Prozessor aufweist. Ferner sollen unter dem Begriff "Schieberegister" im Rahmen der vorliegenden Beschreibung und der Ansprüche insbesondere in Reihe verschaltete Speicherelemente verstanden werden, deren Speicherinhalt in einem Arbeitszyklus von einem Speicherelement in ein folgendes Speicherelement verschoben werden kann.

Vorzugsweise umfasst die erste Kommunikationsschnittstelle eine erste Synchron-Serielle Schnittstelle und die zweite Kommunikationsschnittstelle eine zweite Synchron-Serielle Schnittstelle.

Unter dem Begriff "Synchron-Serielle Schnittstelle" soll im Rahmen der vorliegenden Beschreibung und der Ansprüche insbesondere eine Schnittstelle verstanden werden, die dazu eingerichtet ist, eine Verbindung zwischen zwei elektronischen Geräten herzustellen, wobei eine erste Signalleitung mit einem Übertragungstaktsignal und eine zweite Signalleitung mit einem mit dem Übertragungstaktsignal synchronisierten Datensignal beaufschlagt wird.

Vorzugsweise weist die erste Kommunikationsschnittstelle ein erstes Serial-Peripheral-Interface, SPI, auf und die zweite Kommunikationsschnittstelle ein zweites SPI und das überwachte Signal ist ein Load-Signal des ersten SPI.

Vorzugsweise weist die Signalleitung einen ersten und einen zweiten Abschnitt auf, deren Potenzial durch eine Potenzialtrennung voneinander entkoppelt ist, wobei der erste Abschnitt mit der ersten Kommunikationsschnittstelle und der zweite Abschnitt mit der zweiten Kommunikationsschnittstelle verbunden ist.

Vorzugsweise umfasst das System ferner eine dritte Datenverarbeitungseinheit, wobei die dritte Datenverarbeitungseinheit eine dritte Kommunikationsschnittstelle aufweist und die erste Kommunikationsschnittstelle und die dritte Kommunikationsschnittstelle mittels einer zweiten Signalleitung verbunden sind, wobei die Überwachungseinheit ferner dazu eingerichtet und vorgesehen ist, die dritte Datenverarbeitungseinheit mittels eines zweiten Rücksetzsignals aus einem beliebigen Fehlerzustand in einen definierten Betriebszustand zurückzusetzen, wobei die Überwachungseinheit mittels einer zweiten Überwachungsleitung mit der zweiten Signalleitung verbunden ist und ferner dazu eingerichtet und vorgesehen ist, ein von der ersten Kommunikationsschnittstelle über die zweite Signalleitung an die dritte Kommunikationsschnittstelle übermitteltes zweites Signal, welches eine Datenübertragungsphase zwischen der ersten Kommunikationsschnittstelle und der dritten Kommunikationsschnittstelle durch einen vorbestimmten Spannungspegel des zweiten Signals signalisiert, auf eine Regelmäßigkeit des Auftretens von Übertragungsphasen zu überwachen und bei einer Abweichung das zweite Rücksetzsignal auszulösen.

Ein erfindungsgemäßes Verfahren umfasst ein Überwachen eines von einer ersten Kommunikationsschnittstelle einer ersten Datenverarbeitungseinheit über eine Signalleitung an eine zweite Kommunikationsschnittstelle einer zweiten Datenverarbeitungseinheit übermittelten Signals, welches Datenübertragungsphasen zwischen der ersten Kommunikationsschnittstelle und der zweiten Kommunikationsschnittstelle durch eine vorbestimmten Spannungspegel signalisiert, auf eine Regelmäßigkeit des Auftretens von Datenübertragungsphasen und ein Auslösen eines Rücksetzsignals, welches die erste Datenverarbeitungseinheit und/oder die zweite Datenverarbeitungseinheit in einen definierten Betriebszustand zurückzusetzt, bei einem Abweichen von der Regelmäßigkeit.

Vorzugsweise umfasst die erste Datenverarbeitungseinheit einen Microcontroller und die zweite Datenverarbeitungseinheit ein Schieberegister.

Vorzugsweise weist die erste Kommunikationsschnittstelle ein erstes Serial-Peripheral-Interface, SPI, auf und die zweite Kommunikationsschnittstelle ein zweites SPI und das überwachte Signal ist ein Load-Signal der ersten SPI.

Vorzugsweise umfasst das Verfahren ferner ein Empfangen von Messdaten durch die erste Datenverarbeitungseinheit, ein Erzeugen von Steuerdaten auf Basis der empfangenen Messdaten durch die erste Datenverarbeitungseinheit, ein Signalisieren einer ersten Datenübertragungsphase zwischen der ersten Kommunikationsschnittstelle und der zweiten Kommunikationsschnittstelle mittels des vorbestimmten Spannungspegels des Signals und ein Übertragen der Steuerdaten von der ersten Kommunikationsschnittstelle an die zweite Kommunikationsschnittstelle während der ersten Datenübertragungsphase.

### KURZBESCHREIBUNG DER ZEICHNUNGEN

Die Erfindung wird nachfolgend in der detaillierten Beschreibung anhand von Ausführungsbeispielen erläutert, wobei auf Zeichnungen Bezug genommen wird, in denen:
Fig. 1 ein erstes bevorzugtes Ausführungsbeispiel des erfindungsgemäßen Systems;
Fig. 2 ein zweites bevorzugtes Ausführungsbeispiel des erfindungsgemäßen Systems;
Fig. 3 ein drittes bevorzugtes Ausführungsbeispiel des erfindungsgemäßen Systems;
Fig. 4 ein viertes bevorzugtes Ausführungsbeispiel des erfindungsgemäßen Systems; und
Fig. 5 ein Flussdiagramm eines Prozess zum Überwachen einer Datenverarbeitungseinheit zeigt.

Dabei sind in den Zeichnungen gleiche Elemente durch gleiche Bezugszeichen und gleichartige Elemente durch mit einem lateinischen Bezugszeichen ergänzte Bezugszeichen gekennzeichnet.

### DETAILLIERTE BESCHREIBUNG

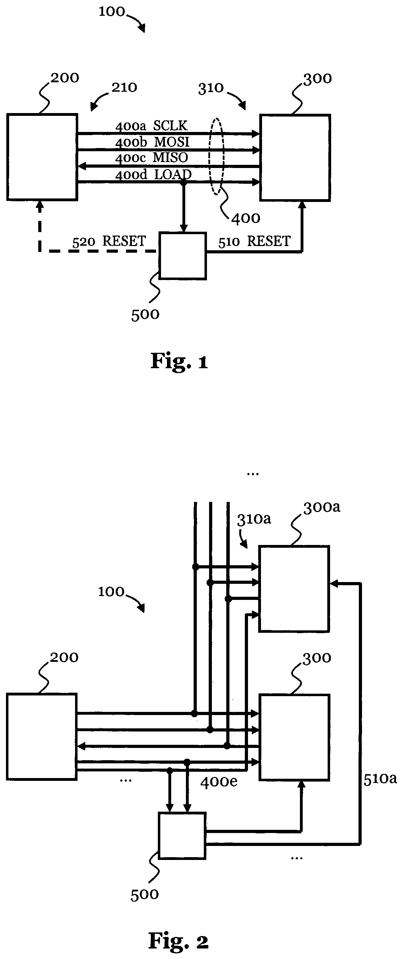

Fig. 1 zeigt ein System 100, umfassend eine erste Datenverarbeitungseinheit 200 (Master) und eine zweite Datenverarbeitungseinheit 300 (Slave). Die erste Datenverarbeitungseinheit 200 umfasst eine erste Serial-Peripheral-Interface-Kommunikationsschnittstelle 210 (SPI-Kommunikationsschnittstelle) und die zweite Datenverarbeitungseinheit 300 umfasst eine zweite SPI-Kommunikationsschnittstelle 310. Die erste SPI-Kommunikationsschnittstelle 210 und die zweite SPI-Kommunikationsschnittstelle 310 sind mittels der Signalleitungen 400a-400d miteinander verbunden. In diesem Zusammenhang sei jedoch angemerkt, dass die Erfindung nicht auf zwei durch einen SPI-Bus verbundene Datenverarbeitungseinheiten 200 und 300 oder eine bestimmte Anzahl an Signalleitungen 400 beschränkt ist, sondern auch unter Verwendung anderer Synchron-Serieller Schnittstellen oder allgemein von Schnittstellen, die Datenübertragungsphasen über eine Signalleitung 400b-400d signalisieren, implementiert werden kann.

Wie in Fig. 1 gezeigt, umfassen die vier Signalleitungen 400a-400d eine Signalleitung 400a zum Übertragen eines Taktsignals (Serial Clock, SCLK), eine Signalleitung 400b zum Übertragen von Daten von der ersten Datenverarbeitungseinheit 200 zur zweiten Datenverarbeitungseinheit 300 (Master Output Slave Input, MOSI), eine Signalleitung 400c zum Übertragen von Daten von der zweiten Datenverarbeitungseinheit 300 zur ersten Datenverarbeitungseinheit 200 (Master Input Slave Output, MISO) und eine Signalleitung 400d zum Übertragen eines Signals (LOAD), welches eine Datenübertragungsphase zwischen der ersten Kommunikationsschnittstelle 200 und der zweiten Kommunikationsschnittstelle 300 signalisiert (bspw. durch einen vorbestimmten Spannungspegel der Signalleitung 400d).

Obwohl Fig. 1 nur eine erste Datenverarbeitungseinheit 200 und eine zweite Datenverarbeitungseinheit 300 zeigt, versteht es sich, dass das System 100, wie in Fig. 2 gezeigt, weitere Datenverarbeitungseinheiten 300a (Slaves) umfassen kann, deren Kommunikationsschnittstellen 310a ebenfalls an der Signalleitung 400a, der Signalleitung 400b und der Signalleitung 400c angeschlossen sind und die über eine separate Signalleitung 400e zum Übertragen eines Signals verfügen, welches eine Datenübertragungsphase zwischen der ersten Kommunikationsschnittstelle 210 und der Kommunikationsschnittstelle 310a der jeweiligen weiteren Datenverarbeitungseinheit 300a signalisiert. In diesem Fall lassen sich die Signale, welche Datenübertragungsphasen zwischen der ersten Kommunikationsschnittstelle 210 und der Kommunikationsschnittstelle 310a der jeweiligen weiteren Datenverarbeitungseinheit 300a signalisieren, der jeweiligen weiteren Datenverarbeitungseinheit 300a eindeutig zuordnen, während Signale, die über die Signalleitungen 400a-400c übertragen werden (ohne weitere Indizien) keine eindeutige Zuordnung erlauben.

Wie in Fig. 1 und Fig. 2 gezeigt, umfasst das System 100 zudem eine Überwachungseinheit 500, welche mittels einer Signalleitung 510 mit der zweiten Datenverarbeitungseinheit 300 verbunden ist. Die Überwachungseinheit 500 ist dazu eingerichtet und vorgesehen, die zweite Datenverarbeitungseinheit 300 mittels eines über die Signalleitung 510 übertragenen Rücksetzsignals (RESET) aus einem Fehlerzustand in einen definierten Betriebszustand zurückzusetzen. Dazu überwacht die Überwachungseinheit 500 die über die Signalleitung 400d übertragenen Signale (LOAD).

Die Überwachung der über die Signalleitung 400d übertragenen Signale (LOAD) ermöglicht im Falle des Vorhandenseins der oben erwähnen weiteren Datenverarbeitungseinheiten 300a, die ebenfalls an den Signalleitungen 400a-400c angeschlossen sind, ein gezieltes Überwachen der Kommunikation zwischen der ersten Datenverarbeitungseinheit 200 und der zweiten Datenverarbeitungseinheit 300 und ein darauf basiertes selektives Zurücksetzen der zweiten Datenverarbeitungseinheit 300. Aus einer alleinigen Überwachung bspw. der über die Signalleitung 400b und/oder die Signalleitung 400c übertragenen Signale (MOSI und/oder MISO) ließe sich hingegen ohne weitere Indizien nur das Zurücksetzen der mit der ersten Datenverarbeitungseinheit 200 verbundenen zweiten Datenverarbeitungseinheit 300 und der weiteren Datenverarbeitungseinheiten 300a bzw. des gesamten Systems 100 (einschließlich der ersten Datenverarbeitungseinheit 200) ableiten, da sich aus einer alleinigen Überwachung der über die Signalleitung 400b und/oder der Signalleitung 400c übertragenen Signale (MOSI und/oder MISO) bei einer Störung oder einem (teilweisen) Ausfall der Kommunikation, ohne weitere Indizien nicht ergeben würde, ob die Kommunikation zwischen der ersten Datenverarbeitungseinheit 200 und der zweiten Datenverarbeitungseinheit 300, oder zwischen der ersten Datenverarbeitungseinheit 200 und einer der weiteren Datenverarbeitungseinheiten 300a gestört oder ausgefallen ist.

Zum Erkennen des Fehlerzustandes ist die Überwachungseinheit 500 mittels einer Überwachungsleitung an der Signalleitung 400d angeschlossen und ferner dazu eingerichtet und vorgesehen, das von der ersten Kommunikationsschnittstelle 210 über die Signalleitung 400d an die zweite Kommunikationsschnittstelle 310 übermittelte Signal (LOAD), welches eine Datenübertragungsphase zwischen der ersten Kommunikationsschnittstelle 210 und der zweiten Kommunikationsschnittstelle 310 signalisiert, auf eine Regelmäßigkeit des Auftretens von Datenübertragungsphasen zu überwachen und bei einer Abweichung auf das Vorliegen eines Fehlerzustands zu schließen. Bei Annahme des Vorliegens eines Fehlerzustands kann dann die zweite Datenverarbeitungseinheit 300 mittels des Rücksetzsignals aus dem Fehlerzustand in einen definierten Betriebszustand zurückgesetzt werden.

Eine Abweichung von der Regelmäßigkeit des Auftretens von Datenübertragungsphasen kann bspw. bei Unterschreiten bzw. Überschreiten einer unteren und/oder einer oberen Grenze hinsichtlich der Anzahl an Datenübertragungsphasen in einer bestimmten Zeitspanne oder innerhalb einer vorgegebenen Anzahl an Arbeitszyklen der ersten Datenverarbeitungseinheit 200 gegeben sein. Ferner kann eine Abweichung von der Regelmäßigkeit des Auftretens von Datenübertragungsphasen bei einer (starken) Variation der Anzahl an Datenübertragungsphasen in einer bestimmten Zeitspanne oder innerhalb einer vorgegebenen Anzahl an Arbeitszyklen der ersten Datenverarbeitungseinheit 200 gegeben sein.

Des Weiteren kann eine Abweichung von der Regelmäßigkeit des Auftretens von Datenübertragungsphasen gegeben sein, wenn eine Dauer einer Pause zwischen Datenübertragungsphasen eine untere und/oder eine obere Grenze unterschreitet bzw. überschreitet oder (stark) variiert. Zudem können obige Bedingungen miteinander verknüpft sein, so dass bspw. eine Abweichung von der Regelmäßigkeit des Auftretens von Datenübertragungsphasen dann als gegeben gilt, wenn mehrere Bedingungen gleichzeitig bzw. in einer vorbestimmten Zeitspanne oder innerhalb einer vorgegebenen Anzahl an Arbeitszyklen der ersten Datenverarbeitungseinheit 200 erfüllt sind.

Ferner versteht es sich, dass die Überwachungseinheit 500 mittels der Signalleitung 520 mit der ersten Datenverarbeitungseinheit 200 verbunden und dazu eingerichtet und vorgesehen sein kann, die erste Datenverarbeitungseinheit 200 mittels eines Rücksetzsignals (RESET) aus einem Fehlerzustand in einen definierten Betriebszustand zurückzusetzen. Bspw. kann die Signalleitung 520 an der Signalleitung 510 angeschlossen sein, so dass sowohl die erste Datenverarbeitungseinheit 200 als auch die zweite Datenverarbeitungseinheit 300 durch das Rücksetzsignal (RESET) in den definierten Betriebszustand zurückgesetzt werden können.

Die Signalleitung 520 kann ferner eine separate Signalleitung 520 sein und die Überwachungseinheit 500 kann ferner dazu eingerichtet sein, bei einer Abweichung von der Regelmäßigkeit des Auftretens von Datenübertragungsphasen zuerst nur die zweite Datenverarbeitungseinheit 300 durch das Rücksetzsignal in den definierten Betriebszustand zurückzusetzen und lediglich bei einem erneuten Auftreten eines Fehlerzustandes bspw. innerhalb einer vorgegebenen Zeitspanne oder innerhalb einer vorgegebenen Anzahl an Datenübertragungsphasen, die erste Datenverarbeitungseinheit 200 und die zweite Datenverarbeitungseinheit 300 in den definierten Betriebszustand zurückzusetzen.

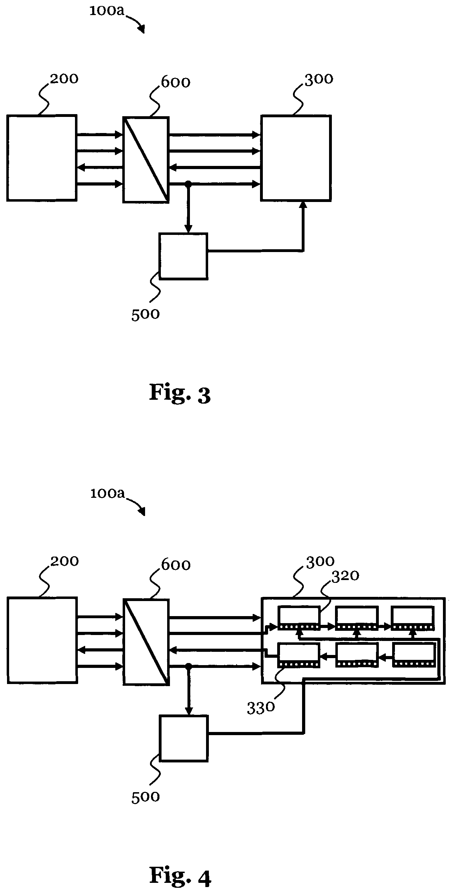

Ferner kann, wie in Fig. 3 gezeigt, zwischen der ersten SPI-Kommunikationsschnittstelle 210 und der zweiten SPI-Kommunikationsschnittstelle 310 eine Potenzialtrennung 600 vorgesehen sein. Die Überwachungsleitung kann dann, je nachdem ob die erste Datenverarbeitungseinheit 200 oder die zweite Datenverarbeitungseinheit 300 überwacht wird, zwischen der ersten Datenverarbeitungseinheit 200 und der Potenzialtrennung 600 oder, wie in Fig. 3 gezeigt, zwischen der Potenzialtrennung 600 und der zweiten Datenverarbeitungseinheit 300 an die Signalleitung 400d angeschlossen sein. Dadurch kann vermieden werden, dass die Überwachungsleitung oder die Signalleitung 510 um eine eigene Potenzialtrennung ergänzt werden muss.

Wie in Fig. 4 gezeigt, kann die zweite Datenverarbeitungseinheit 300 ein Ausgangsschieberegister 320 und ein Eingangsschieberegister 330 umfassen. Dabei ist das Ausgangsschieberegister 320 an die Signalleitung 400b und das Eingangsschieberegister 330 an die Signalleitung 400c angeschlossen. D. h., Daten werden während der Datenübertragungsphase von der ersten Datenverarbeitungseinheit 200 in das Ausgangsschieberegister 320 geschrieben und aus dem Eingangsschieberegister 330 ausgelesen. Das Zurücksetzen der zweiten Datenverarbeitungseinheit 300 in den definierten Betriebszustand kann dann bspw. das Löschen eines Inhalts des Ausgangsschieberegisters 320 umfassen.

Insbesondere kann die erste Datenverarbeitungseinheit 200 während einer Datenübertragungsphase Messdaten aus dem Eingangsschieberegister 330 auslesen und auf Basis der ausgelesenen Messdaten Steuerdaten erzeugen. Die Steuerdaten können dann während der Datenübertragungsphase oder einer folgenden Datenübertragungsphase in das Ausgangsschieberegister 320 geschrieben werden.

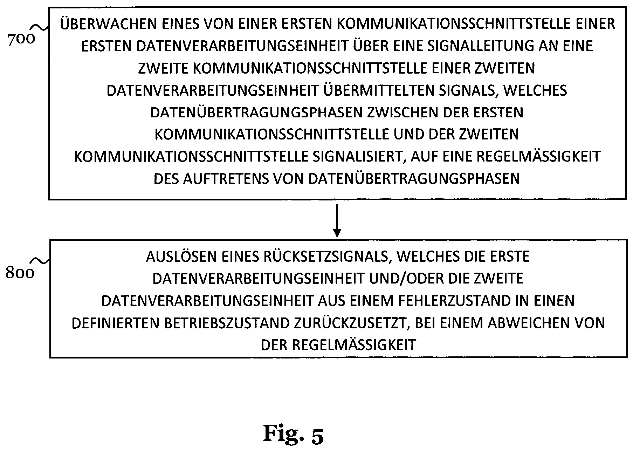

Fig. 5 zeigt ein Flussdiagramm eines Prozess zum Überwachen der ersten Datenverarbeitungseinheit 200. Bei Schritt 700 startet der Prozess mit dem Überwachen der Signalleitung 400d hinsichtlich der Regelmäßigkeit des Auftretens von Datenübertragungsphasen. Wird eine Abweichung von der Regelmäßigkeit festgestellt, wird die erste Datenverarbeitungseinheit 200 und/oder die zweite Datenverarbeitungseinheit 300 bei Schritt 800 in einen definierten Betriebszustand zurückgesetzt. Die Art des Fehlerfalls ist dabei unerheblich. Vielmehr reicht es aus, dass ein beliebiger Fehlerzustand angenommen wird, von dem ausgegangen wird, dass er durch ein Zurücksetzen der ersten Datenverarbeitungseinheit 200 und/oder der zweiten Datenverarbeitungseinheit 300 überwunden werden kann.

### BEZUGSZEICHENLISTE

- 100, 100a: System
- 200: Datenverarbeitungseinheit
- 210: Kommunikationsschnittstelle
- 300: Datenverarbeitungseinheit
- 310: Kommunikationsschnittstelle
- 320: Ausgangsschieberegister
- 330: Eingangsschieberegister
- 400: Signalleitung
- 500: Überwachungseinheit
- 510, 510a: Signalleitung
- 520: Signalleitung
- 600: Potenzialtrennung
- 700, 800: Prozessschritte

## Patentansprüche

1. System (100, 100a), umfassend:
eine erste Datenverarbeitungseinheit (200) und eine zweite Datenverarbeitungseinheit (300),
wobei die erste Datenverarbeitungseinheit (200) eine erste Kommunikationsschnittstelle (210) und die zweite Datenverarbeitungseinheit (300) eine zweite Kommunikationsschnittstelle (310) aufweist und die erste Kommunikationsschnittstelle (210) und die zweite Kommunikationsschnittstelle (310) mittels einer Signalleitung (400d) verbunden sind; und
eine Überwachungseinheit, welche dazu eingerichtet und vorgesehen ist, die erste Datenverarbeitungseinheit (200) und/oder die zweite Datenverarbeitungseinheit (300) mittels eines Rücksetzsignals in einen definierten Betriebszustand zurückzusetzen;
wobei die Überwachungseinheit (500) mittels einer Überwachungsleitung mit der Signalleitung (400d) verbunden ist; und
die Überwachungseinheit (500) ferner dazu eingerichtet und vorgesehen ist, ein von der ersten Kommunikationsschnittstelle (210) über die Signalleitung (400d) an die zweite Kommunikationsschnittstelle (310) übermitteltes Signal, welches eine Datenübertragungsphase zwischen der ersten Kommunikationsschnittstelle (210) und der zweiten Kommunikationsschnittstelle (310) durch einen vorbestimmten Spannungspegel des Signals signalisiert, auf eine Regelmäßigkeit des Auftretens von Datenübertragungsphasen zu überwachen und bei einer Abweichung das Rücksetzsignal auszulösen.

2. System (100, 100a) nach Anspruch 1, wobei die erste Datenverarbeitungseinheit (200) einen Microcontroller und die zweite Datenverarbeitungseinheit (300) ein Schieberegister (320, 330) umfasst.

3. System (100, 100a) nach Anspruch 1 oder 2, wobei die erste Kommunikationsschnittstelle (210) eine erste Synchron-Serielle Schnittstelle und die zweite Kommunikationsschnittstelle (310) eine zweite Synchron-Serielle Schnittstelle umfasst.

4. System (100, 100a) nach einem der Ansprüche 1 bis 3, wobei die erste Kommunikationsschnittstelle (210) ein erstes Serial-Peripheral-Interface, SPI, aufweist und die zweite Kommunikationsschnittstelle (310) ein zweites SPI aufweist und das überwachte Signal ein Load-Signal des ersten SPI ist.

5. System (100, 100a) nach einem der Ansprüche 1 bis 4, wobei die Signalleitung (400) einen ersten und einen zweiten Abschnitt aufweist, deren Potenzial durch eine Potenzialtrennung (600) voneinander entkoppelt ist, wobei der erste Abschnitt mit der ersten Kommunikationsschnittstelle (210) und der zweite Abschnitt mit der zweiten Kommunikationsschnittstelle (310) verbunden ist.

6. System (100, 100a) nach einem der Ansprüche 1 bis 5, ferner umfassend:
eine dritte Datenverarbeitungseinheit (300a), wobei die dritte Datenverarbeitungseinheit (300a) eine dritte Kommunikationsschnittstelle (310a) aufweist und die erste Kommunikationsschnittstelle (210) und die dritte Kommunikationsschnittstelle (310a) mittels einer zweiten Signalleitung (400e) verbunden sind, wobei die Überwachungseinheit (500) ferner dazu eingerichtet und vorgesehen ist, die dritte Datenverarbeitungseinheit (300a) mittels eines zweiten Rücksetzsignals in einen definierten Betriebszustand zurückzusetzen, wobei die Überwachungseinheit (500) mittels einer zweiten Überwachungsleitung mit der zweiten Signalleitung (400e) verbunden ist und ferner dazu eingerichtet und vorgesehen ist, ein von der ersten Kommunikationsschnittstelle (210) über die zweite Signalleitung (400e) an die dritte Kommunikationsschnittstelle (310a) übermitteltes zweites Signal, welches eine Datenübertragungsphase zwischen der ersten Kommunikationsschnittstelle (210) und der dritten Kommunikationsschnittstelle (310a) durch einen vorbestimmten Spannungspegel des zweiten Signals signalisiert, auf eine Regelmäßigkeit des Auftretens von Übertragungsphasen zu überwachen und bei einer Abweichung das zweite Rücksetzsignal auszulösen.

7. Verfahren zum Überwachen einer ersten Datenverarbeitungseinheit (200), umfassend:
Überwachen (700) eines von einer ersten Kommunikationsschnittstelle (210) der ersten Datenverarbeitungseinheit (200) über eine Signalleitung (4ood) an eine zweite Kommunikationsschnittstelle (310) einer zweiten Datenverarbeitungseinheit (300) übermittelten Signals, welches Datenübertragungsphasen zwischen der ersten Kommunikationsschnittstelle (210) und der zweiten Kommunikationsschnittstelle (310) durch eine vorbestimmten Spannungspegel signalisiert, auf eine Regelmäßigkeit des Auftretens von Datenübertragungsphasen; und
Auslösen (800) eines Rücksetzsignals, welches die erste Datenverarbeitungseinheit (200) und/oder die zweite Datenverarbeitungseinheit (300) in einen definierten Betriebszustand zurücksetzt, bei einem Abweichen von der Regelmäßigkeit.

8. Verfahren nach Anspruch 7, wobei die erste Datenverarbeitungseinheit (200) einen Microcontroller und die zweite Datenverarbeitungseinheit (300) ein Schieberegister (320, 330) umfasst.

9. Verfahren nach Anspruch 7 oder 8, wobei die erste Kommunikationsschnittstelle (210) ein erstes Serial-Peripheral-Interface, SPI, aufweist und die zweite Kommunikationsschnittstelle (310) ein zweites SPI aufweist und das überwachte Signal ein Load-Signal der ersten SPI ist.

10. Verfahren nach einem der Ansprüche 7 bis 9, ferner umfassend:
Empfangen von Messdaten durch die erste Datenverarbeitungseinheit (200);
Erzeugen von Steuerdaten auf Basis der empfangenen Messdaten durch die erste Datenverarbeitungseinheit (200);
Signalisieren einer ersten Datenübertragungsphase zwischen der ersten Kommunikationsschnittstelle (210) und der zweiten Kommunikationsschnittstelle (310) mittels des vorbestimmten Spannungspegels des Signals; und
Übertragen der Steuerdaten von der ersten Kommunikationsschnittstelle (210) an die zweite Kommunikationsschnittstelle (310) während der ersten Datenübertragungsphase.

## Claims

1. A system (100, 100a), comprising:
a first data processing unit (200) and a second data processing unit (300), wherein the first data processing unit (200) comprises a first communication interface (210) and the second data processing unit (300) comprises a second communication interface (310), and the first communication interface (210) and the second communication interface (310) are connected by a signal line (400d); and
a monitoring unit, which is configured and provided to reset the first data processing unit (200) and/or the second data processing unit (300) to a defined operating state via a reset signal;
wherein the monitoring unit (500) is connected to the signal line (400d) by a monitoring line;
and
the monitoring unit (500) is further configured and provided to monitor a signal transmitted from the first communication interface (210) via the signal line (400d) to the second communication interface (310), the signal signaling a data transmission phase between the first communication interface (210) and the second communication interface (310) through a predetermined voltage level of the signal, for a regularity of an occurrence of data transmission phases and to trigger the reset signal in case of a deviation.

2. The system (100, 100a) of claim 1, wherein the first data processing unit (200) comprises a microcontroller and the second data processing unit (300) comprises a shift register (320, 330).

3. The system (100, 100a) of claim 1 or 2, wherein the first communication interface (210) comprises a first Synchronous Serial Interface and the second communication interface (310) comprises a second Synchronous Serial Interface.

4. The system (100, 100a) of any one of claims 1 to 3, wherein the first communication interface (210) comprises a first Serial Peripheral Interface, SPI, and the second communication interface (310) comprises a second SPI, and the monitored signal is a load signal of the first SPI.

5. The system (100, 100a) of any one of claims 1 to 4, wherein the signal line (400) comprises a first and a second section, the potential of which is decoupled from each other by a potential separation (600), wherein the first section is connected to the first communication interface (210) and the second section is connected to the second communication interface (310).

6. The system (100, 100a) of any one of claims 1 to 5, further comprising:
a third data processing unit (300a), wherein the third data processing unit (300a) comprises a third communication interface (310a) and the first communication interface (210) and the third communication interface (310a) are connected by a second signal line (400e), wherein
the monitoring unit (500) is further configured and provided to reset the third data processing unit (300a) to a defined operating state via a second reset signal, wherein the monitoring unit (500) is connected to the second signal line (400e) by a second monitoring line and is further configured and provided to monitor a second signal transmitted from the first communication interface (210) via the second signal line (400e) to the third communication interface (310a), the second signal signaling a data transmission phase between the first communication interface (210) and the third communication interface (310a) by a predetermined voltage level of the second signal, for a regularity in an occurrence of data transmission phases and to trigger the second reset signal in case of a deviation.

7. A method for monitoring a first data processing unit (200), comprising:
monitoring (700) a signal transmitted from a first communication interface (210) of the first data processing unit (200) via a signal line (400d) to a second communication interface (310) of a second data processing unit (300), the signal signaling data transmission phases between the first communication interface (210) and the second communication interface (310) by a predetermined voltage level, for a regularity of an occurrence of data transmission phases; and
triggering (800) a reset signal which resets the first data processing unit (200) and/or the second data processing unit (300) to a defined operating state, in the event of a deviation from the regularity.

8. The method of claim 7, wherein the first data processing unit (200) comprises a microcontroller and the second data processing unit (300) comprises a shift register (320, 330).

9. The method of claim 7 or 8, wherein the first communication interface (210) comprises a first Serial Peripheral Interface, SPI, and the second communication interface (310) comprises a second SPI, and the monitored signal is a load signal of the first SPI.

10. The method of any one of claims 7 to 9, further comprising:
receiving measurement data by the first data processing unit (200);
generating control data based on the received measurement data by the first data processing unit (200);
signaling a first data transmission phase between the first communication interface (210) and the second communication interface (310) by the predetermined voltage level of the signal; and
transferring the control data from the first communication interface (210) to the second communication interface (310) during the first data transmission phase.

## Revendications

1. Système (100, 100a) comprenant :
une première unité de traitement de données (200) et une deuxième unité de traitement de données (300), dans lequel la première unité de traitement de données (200) présente une première interface de communication (210) et la deuxième unité de traitement de données (300) présente une deuxième interface de communication (310) et la première interface de communication (210) et la deuxième interface de communication (310) sont reliées au moyen d'une ligne de signal (400d) ; et
une unité de surveillance qui est conçue et prévue afin de réinitialiser la première unité de traitement de données (200) et/ou la deuxième unité de traitement de données (300) au moyen d'un signal de réinitialisation dans un état de fonctionnement défini ;
dans lequel l'unité de surveillance (500) est reliée au moyen d'une ligne de surveillance à la ligne de signal (400d) ;
et
l'unité de surveillance (500) est de plus conçue et prévue afin de surveiller un signal transmis par la première interface de communication (210) par le biais de la ligne de signal (400d) à la deuxième interface de communication (310) qui signalise une phase de transmission de données entre la première interface de communication (210) et la deuxième interface de communication (310) par un niveau de tension prédéterminé du signal, quant à une régularité de l'apparition de phases de transmission de données et de déclencher le signal de réinitialisation en cas d'écart.

2. Système (100, 100a) selon la revendication 1, dans lequel la première unité de traitement de données (200)
comprend un microcontrôleur et la deuxième unité de traitement de données (300) un registre à décalage (320, 330).

3. Système (100, 100a) selon la revendication 1 ou 2, dans lequel la première interface de communication (210) comprend une première interface synchrone-série et la deuxième interface de communication (310) comprend une seconde interface synchrone-série.

4. Système (100, 100a) selon l'une quelconque des revendications 1 à 3, dans lequel la première interface de communication (210) présente une première interface série-périphérique, SPI et la deuxième interface de communication (310) présente une seconde SPI et le signal surveillé est un signal de charge de la première SPI.

5. Système (100, 100a) selon l'une quelconque des revendications 1 à 4, dans lequel la ligne de signal (400) présente une première et une seconde section, dont le potentiel est découplé par une séparation de potentiel (600), dans lequel la première section est reliée à la première interface de communication (210) et la seconde section est reliée à la deuxième interface de communication (310).

6. Système (100, 100a) selon l'une quelconque des revendications 1 à 5, comprenant de plus :
une troisième unité de traitement de données (300a), dans lequel la troisième unité de traitement de données (300a) présente une troisième interface de communication (310a) et la première interface de communication (210) et la troisième interface de communication (310a) sont reliées au moyen d'une seconde ligne de signal (4000), dans lequel l'unité de surveillance (500) est de plus conçue et prévue afin de réinitialiser la troisième unité de traitement de données (300a) au moyen d'un second signal de réinitialisation dans un état de fonctionnement défini, dans lequel l'unité de surveillance (500) est reliée au moyen d'une seconde ligne de surveillance à la seconde ligne de signal (4000) et est de plus conçue et prévue afin de surveiller un second signal transmis par la première interface de communication (210) par le biais de la seconde ligne de signal (4000) à la troisième interface de communication (310a) qui signalise une phase de transmission de données entre la première interface de communication (210) et la troisième interface de communication (310a) par un niveau de tension prédéterminé du second signal, quant à une régularité de l'apparition de phases de transmission et de déclencher le second signal de réinitialisation en cas d'écart.

7. Procédé de surveillance d'une première unité de traitement de données (200) comprenant :
la surveillance (700) d'un signal transmis par une première interface de communication (210) de la première unité de traitement de données (200) par le biais d'une ligne de signal (400d) à une deuxième interface de communication (310) d'une deuxième unité de traitement de données (300), signal qui signalise des phases de transmission de données entre la première interface de communication (210) et la deuxième interface de communication (310) par un niveau de tension prédéterminé, quant à une régularité de l'apparition de phases de transmission de données ; et
le déclenchement (800) d'un signal de réinitialisation qui réinitialise la première unité de traitement de données (200) et/ou la deuxième unité de traitement de données (300) dans un état de fonctionnement défini, en cas d'écart de la régularité.

8. Procédé selon la revendication 7, dans lequel la première unité de traitement de données (200) comprend un microcontrôleur et la deuxième unité de traitement de données (300) un registre à décalage (320, 330).

9. Procédé selon la revendication 7 ou 8, dans lequel la première interface de communication (210) présente une première interface série-périphérique, SRI, et la deuxième interface de communication (310) présente une seconde SPI et le signal surveillé est un signal de charge de la première SPI.

10. Procédé selon l'une quelconque des revendications 7 à 9, comprenant de plus :
la réception de données de mesure par la première unité de traitement de données (200) ;
la génération de données de commande sur la base de données de mesure reçues par la première unité de traitement de données (200) ;
la signalisation d'une première phase de transmission de données entre la première interface de communication (210) et la deuxième interface de communication (310) au moyen du niveau de tension prédéterminé du signal ; et
la transmission de données de commande de la première interface de communication (210) à la deuxième interface de communication (310) pendant la première phase de transmission de données.
